# DEMANDE DE BREVET EUROPEEN

(11) **EP 4 480 312 A1**
(43) Date de publication de la demande: **25.12.2024**
(21) Numéro de dépôt: 24183131.2
(22) Date de dépôt: 19.06.2024
(51) Int. Cl.: A01M 21/02, B60F 3/00, E02B 15/10, E01H 12/00

(54) **VÉHICULE AMPHIBIE D'ARRACHAGE DE PLANTES INVASIVES**

(30) Priorité: 23.06.2023 FR 2306570
(71) Demandeur: FL Agri/VL Meca-Conseil, 01340 Jayat (FR); PM Diffusions 01, 01310 Curtafond (FR)
(72) Inventeur: LORIOT, Franck, 01340 Jayat (FR)
(74) Mandataire: Ipside

(57) **Abrégé**

Véhicule amphibie (100), d'entretien d'une zone humide (P) notamment par le retrait d'une espèce exotique envahissante (EEE) de type plantes aquatiques invasives ou similaires, comportant un tracteur amphibie (10) motorisé et un moyen d'arrachage, ledit véhicule comportant en outre une remorque flottante (30) tractée par le tracteur (10) et comprenant une benne (31) de collecte des plantes arrachées, le moyen d'arrachage étant une grue télescopique (20) équipée d'un grappin (21) à son extrémité libre, ledit grappin étant configuré pour permettre à la fois la préhension et l'arrachage de plantes invasives, en sorte de les déposer dans la benne (31).

## Description

### DOMAINE TECHNIQUE

La présente invention appartient au domaine des véhicules amphibies, notamment les engins d'entretien des zones humides. Elle concerne plus particulièrement un véhicule amphibie d'arrachage de plantes invasives.

La présente invention trouve une application directe, mais non exclusive, dans la lutte contre les plantes et algues invasives (Jussie, Myriophylle du Brésil, etc.) en zone de transport marécageuse (corridors fluviaux par exemple).

### ÉTAT DE L'ART

Les véhicules amphibies, également connus sous le nom de véhicules à deux usages ou véhicules tout-terrain amphibies, sont des véhicules capables de fonctionner à la fois sur terre et dans l'eau. Leur conception spéciale leur permet de traverser des terrains difficiles tels que des marécages, des lacs, des rivières ou des zones côtières, offrant ainsi une polyvalence d'utilisation.

Historiquement, les origines des véhicules amphibies remontent à l'Antiquité, lorsque des moyens de transport capables de naviguer sur l'eau ont été développés. Cependant, les premiers véhicules amphibies modernes, tels que nous les connaissons aujourd'hui, sont apparus au début du 20^{ème} siècle.

L'un des premiers véhicules amphibies notables, dit « autochenille », a été inventé par Adolphe Kégresse en 1906. Il s'agissait d'un véhicule à chenilles qui pouvait se déplacer à la fois sur la terre ferme et sur l'eau. Cependant, ces premiers véhicules étaient principalement utilisés à des fins militaires, notamment pendant la Première Guerre mondiale.

Au fil du temps, les véhicules amphibies se sont développés et sont devenus plus avancés sur le plan technologique. Dans les années 1930, l'Américain Donald Roebling a développé un véhicule amphibie appelé « Alligator » qui a été utilisé pour des opérations de fauchage dans l'eau. L'Alligator était équipé d'un système de broyage pour éliminer les plantes nuisibles dans les canaux d'irrigation. Depuis lors, les véhicules amphibies ont continué à évoluer, avec de nouvelles conceptions et des améliorations constantes de leurs capacités. Les techniques de propulsion ont également été améliorées, passant des chenilles aux roues ou aux hélices marines, permettant ainsi une meilleure adaptation aux différentes conditions terrestres et aquatiques.

Dans le contexte spécifique de la lutte contre les plantes invasives, notamment celles classées comme espèces exotiques envahissantes (EEE), les véhicules amphibies sont utilisés pour accéder à des zones difficilement accessibles par d'autres moyens. Ils sont particulièrement utiles dans les zones humides, les marais, les rivières ou les lacs où les plantes et algues invasives peuvent proliférer et nuire à l'écosystème local.

Les véhicules amphibies utilisés pour l'élimination de ces plantes invasives sont généralement équipés de dispositifs adaptés tels que des broyeurs, des sécateurs, des faucheuses, des lames de faucardage, des fraises rotatives, etc. Ils peuvent également être équipés de systèmes de pulvérisation pour l'application de produits chimiques de lutte contre les plantes invasives, selon les besoins.

Il est important de noter que ces outils varient en fonction des fabricants et des modèles d'engins amphibies utilisés.

On connaît par exemple les modèles *Truxor DM 5045* et *Eco Harvester.* Le premier est un engin amphibie polyvalent utilisé pour diverses tâches, et équipé d'un bras télescopique avec une tête de destruction mécanique dotée de lames rotatives ou de brosses qui permettent de couper ou d'arracher les plantes indésirables. Le deuxième est un véhicule amphibie conçu spécifiquement pour l'élimination des plantes et algues décomposées à la surface de l'eau. Il est équipé d'un système de rouleau et de convoyeur collectant les algues et les acheminant vers une trémie intégrée.

Le document FR2722736 décrit un véhicule amphibie ayant une motricité spécifique pour circuler sur les eaux peu profondes et les sols peu porteurs. Cette motricité est fondée sur l'utilisation de roues à aubes et de roues basse pression dont la garde au sol serait variable selon une circulation sur l'eau (les roues basse pression seraient remontées, afin d'obtenir un faible tirant d'eau) ou sur les autres terrains peu porteurs comme les marais verts, vasières ou prairies inondables, auquel cas les roues basse pression seraient descendues afin d'avoir une garde au sol importante.

La conception de ce véhicule lui permet de récolter par l'intermédiaire d'un jeu de tapis roulant, les matières végétales décomposées flottantes à la surface des étendues liquides (ces matières végétales forment une pellicule flottante qui asphyxie le milieu vivant immergé). Ces matières récoltées sont stockées dans une benne prévue à cet effet. Le tapis récolteur étant articulé, la récolte devient possible quel que soit le type de terrain et quelle que soit la garde au sol du véhicule. Ce véhicule peut, à l'aide d'outils frontaux de coupe, récolter les herbes et roseaux proliférants qui sont également stockés dans la benne. Cette dernière, vidée et enlevée, offre une plate-forme de chargement intéressante pour transporter du matériel.

Le document CN203788977 décrit une autre solution basée elle aussi sur la collecte des matières végétales nuisibles flottant en surface de l'eau, au moyen d'un système de convoyage.

Toutes ces solutions ne répondent pas efficacement à la problématique d'élimination irréversible de plantes invasives particulièrement redoutables telles que la Jussie et le Myriophylle du Brésil, pour lesquelles la découpe à la tige ne résout pas totalement le problème.

De plus, ces solutions antérieures ne comprennent pas toutes des volumes dédiés à la collecte des plantes ramassées et, le cas échéant, ces volumes sont intégrés au véhicule et limités par la taille de celui-ci. Cela réduit en outre l'espace disponible sur le véhicule et rend son utilisation pénible.

Dans la lutte contre les plantes invasives, on connaît également l'arrachage manuel. Cette solution montre rapidement ses limites, dès lors que la densité et la surface à traiter deviennent importantes, et n'est pas exempte de danger pour les personnes effectuant l'opération.

Globalement, après l'arrachage manuel, les solutions mécanisées les plus répandues sont le bateau de faucardage, la pelle sur barge et le chenillard amphibie.

Le bateau de faucardage nécessite une mise à l'eau et des engins sur berge. De plus, l'inconvénient majeur de la technique de faucardage est que d'une part les algues restent enracinées dans le fond et d'autre part les tiges, coupées, se dédoublent lors d'une progression ultérieure et rapide de la plante.

La méthode de faucardage ne permet donc pas d'éradiquer les plantes définitivement ; il s'agit d'une solution temporaire qui nécessite d'être reconduite régulièrement.

En ce qui concerne la pelle sur barge, le déchargement sur berge reste possible mais le déplacement est lent. Cette solution nécessite également une mise à l'eau et produit un travail grossier avec des boutures.

Enfin, le chenillard amphibie n'a aucune capacité de collecte des plantes arrachées, ce qui occasionne la perte des plantes ramassées en chemin, et n'est pas compatible avec d'autres outils de travail.

### PRÉSENTATION DE L'INVENTION

La présente invention vise à pallier tout ou partie des inconvénients de l'art antérieur exposés ci-avant en proposant une solution légère et polyvalente pour s'adapter à toutes sortes de besoins lors des chantiers d'arrachage de plantes invasives.

Un avantage de l'invention est de permettre un traitement définitif en arrachant les plantes invasives à la racine.

Un autre avantage de l'invention est de proposer un moyen d'arrachage avec un grand rayon d'action autour du véhicule.

Un autre avantage encore de l'invention est de proposer un espace de collecte dédié, qui ne représente aucun encombrement pour l'espace disponible dans le véhicule.

À cet effet, la présente invention a pour objet un véhicule amphibie, d'entretien d'une zone humide notamment par le retrait d'une espèce exotique envahissante (EEE) de type plantes aquatiques invasives ou similaires. Ce véhicule comporte classiquement un tracteur amphibie motorisé et un moyen d'arrachage. Ce véhicule est remarquable en ce qu'il comporte en outre une remorque flottante tractée par le tracteur et comprenant une benne de collecte des plantes arrachées, et en ce que le moyen d'arrachage est une grue télescopique équipée d'un grappin à son extrémité libre, ledit grappin étant configuré pour permettre à la fois la préhension et l'arrachage de plantes invasives, en sorte de les déposer dans la benne.

Cela permet donc un arrachage efficace des plantes invasives, qui limite les boutures, et une collecte de volumes importants desdites plantes avant leur déchargement sur la berge en vue d'un traitement ultérieur (méthanisation par exemple).

Avantageusement, la remorque flottante comporte des roues et des flotteurs placés sous la benne, et agencés latéralement et longitudinalement à une direction de déplacement de ladite remorque.

Ainsi, la remorque est apte à se déplacer aussi bien sur terre que sur l'eau, avec un agencement hydrodynamique des roues et des flotteurs.

Selon un mode de réalisation de l'invention, le tracteur amphibie comporte des flotteurs placés latéralement d'un côté et de l'autre de son châssis, et longitudinalement par rapport à une direction de déplacement du tracteur. Ces flotteurs apportent une flottaison supplémentaire au tracteur amphibie qui peut être muni de flotteurs principaux disposés sous son châssis.

Plus particulièrement, les flotteurs du tracteur sont articulés en « papillon » entre une position basse de flottaison et une position haute de rangement réduisant la largeur dudit tracteur, afin de ne pas gêner le trafic sur une route conventionnelle. Selon un mode de réalisation avantageux, la grue est montée rotative sur une surface supérieure du tracteur amphibie. Cela lui permet de bénéficier d'un maximum d'amplitude de mouvement autour du tracteur et ainsi d'atteindre aisément différents endroits d'arrachage tout en limitant le déplacement du véhicule en entier.

Selon un mode de réalisation, le tracteur amphibie comporte une cabine de conduite, et la grue comporte un siège de commande qui lui est couplé en rotation et qui est indépendant de ladite cabine de conduite. De ce fait, le véhicule peut être piloté par deux opérateurs, l'un s'occupant de la conduite du tracteur le long de la zone humide à traiter, et l'autre s'occupant de la commande de la grue et donc de l'arrachage des plantes invasives et de leur dépôt dans la remorque. Selon un mode de réalisation, le tracteur amphibie comporte en outre un stabilisateur, sous forme de pantographe pourvu de deux roues à ses extrémités, pour améliorer la flottaison et la stabilité dudit tracteur. En effet, les roues du stabilisateur sont surélevées par rapport aux flotteurs du tracteur et permettent de relever le tracteur malgré l'évasement, au moins au niveau du stabilisateur.

De façon particulièrement avantageuse, le grappin de la grue comporte deux peignes en regard, dont les dents s'intercalent lorsque ledit grappin est fermé en sorte d'arracher des plantes invasives à la racine sans les couper. Cela permet donc de limiter fortement la formation de boutures et, par là-même, de réduire le risque de prolifération de certaines plantes dont les tiges coupées ont tendance à se dédoubler lors de la progression future de la plante.

Selon un mode de réalisation, le tracteur comporte au moins un relevage permettant d'atteler la remorque flottante. De préférence, ce relevage est situé à l'arrière du tracteur.

Selon un mode de réalisation particulier, améliorant le contrôle centralisé des outils, le véhicule amphibie comporte une centrale hydraulique commandant, entre autres, la grue ainsi que les flotteurs et le stabilisateur à roues du tracteur.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un véhicule amphibie d'arrachage de plantes invasives, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : une vue en perspective d'un véhicule amphibie selon un mode de réalisation de l'invention ;
- Figure 2 : une vue en perspective du véhicule amphibie sans la remorque flottante qui a été désengagée du relevage arrière ;
- Figure 3 : une vue de côté du véhicule amphibie sans la remorque, montrant le détail du grappin de la grue ;
- Figure 4 : une vue arrière en perspective du véhicule amphibie sans la remorque, avec le stabilisateur à roues en forme de pantographe ;
- Figure 5 : le véhicule amphibie au complet, en action sur un plan d'eau infesté de plantes invasives ;
- Figure 6 : une vue de côté schématique de la remorque flottante selon un mode de réalisation de l'invention.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un véhicule amphibie pour l'arrachage de plantes invasives, destinée principalement à une utilisation en zone humide (plan d'eau, marais, marécage, etc.). Cet exemple, non limitatif, est donné pour une meilleure compréhension de l'invention et n'exclut pas l'utilisation du véhicule sur terre ferme.

Les principales plantes aquatiques et algues invasives pour lesquelles l'invention a été développée sont la Jussie et le Myriophylle du Brésil, qui sont classées comme espèces exotiques envahissantes (EEE).

Dans la présente description, l'expression « véhicule amphibie » désigne un véhicule motorisé qui, grâce à des moyens et équipements spécifiques, peut se déplacer sur terre et sur l'eau.

Dans la suite de la description, les termes « plante » et « algue » ainsi que leurs formes plurielles sont employées pour désigner une plante ou une algue invasive, ou tout le moins nuisible ou indésirable, qui doit de préférence être éliminée pour protéger la biodiversité et préserver l'équilibre de l'écosystème local.

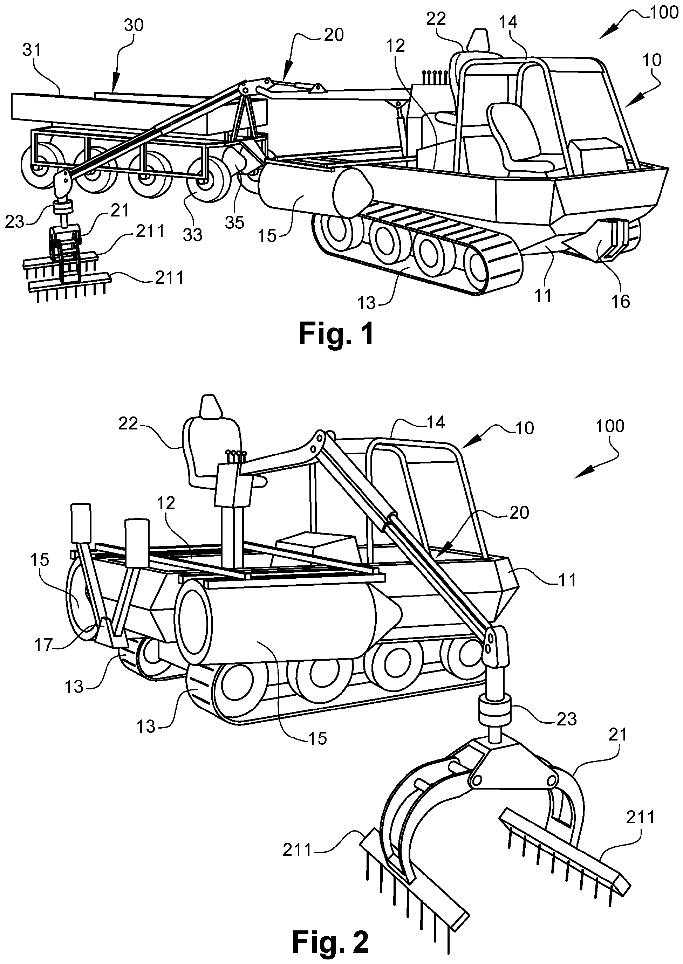

La figure 1 représente un véhicule amphibie 100 motorisé comportant un tracteur amphibie 10, qui est l'élément porteur de l'ensemble, une grue télescopique 20 d'arrachage des plantes, montée rotative sur le tracteur, et une remorque flottante 30 attelée à l'arrière dudit tracteur.

Le tracteur amphibie 10 comporte un châssis 11 surmonté d'un espace arrière 12 dans lequel est installée la grue 20. Cet espace 12 est situé immédiatement derrière une cabine de conduite 14, ou poste de conduite, qui comprend tous les équipements et servitudes nécessaires au contrôle du tracteur 10, notamment de son système de propulsion.

Le tracteur 10 est équipé d'un moteur adapté entraînant un jeu de chenilles 13 recouvrant chacune une pluralité de roues, ici quatre par chenille, en sorte de s'adapter à tous types de terrains.

Bien entendu, les chenilles à roues peuvent être remplacées par des roues seules, des chenilles seules (en caoutchouc ou en acier), ou par tout autre dispositif de déplacement adéquat.

Le tracteur amphibie 10 comporte en outre des flotteurs principaux, non visibles sur les figures, et des flotteurs auxiliaires 15 pour améliorer la flottaison globale du véhicule amphibie 100.

Selon l'exemple de réalisation illustré, le tracteur 10 comporte deux flotteurs 15, un à chaque côté latéral de sa carrosserie.

Les flotteurs 15 présentent des formes d'obus et sont agencés longitudinalement suivant la direction de déplacement du tracteur 10, et donc du véhicule amphibie 100, avec leur tête conique pointant vers l'avant. Cet agencement confère ainsi un avantage hydrodynamique au tracteur 10.

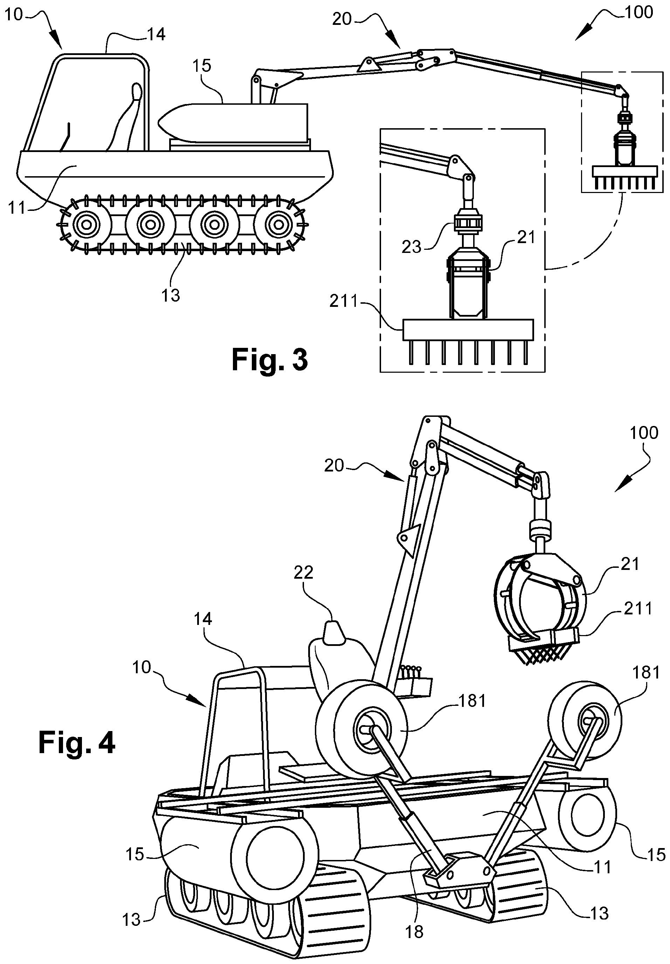

Les flotteurs 15 sont reliés l'un à l'autre par le biais d'une structure métallique articulée, articulant les flotteurs 15 en « papillon » entre une position basse de navigation (flottaison), représentée sur la figure 2 par exemple, et une position haute de rangement, représentée sur la figure 3, réduisant la largeur du tracteur 10 en vue de son déplacement terrestre sur une route conventionnelle.

En raison de leur disposition latérale, les flotteurs 15 améliorent la stabilité du tracteur 10 sur l'eau, d'autant plus que l'espace arrière 12, encadré par lesdits flotteurs, reçoit la grue 20 qui présente une certaine inertie surtout lorsqu'elle est à débattement maximal.

La grue 20 est télescopique et présente des dimensions adaptées au besoin d'exploitation du véhicule amphibie 100.

La grue 20 comprend un siège de commande 22 qui lui est couplé en rotation, autrement dit les deux tournant ensemble et de la même façon. Ce siège 22 dispose des moyens de commande nécessaires tels que les manettes de commande de la vanne de contrôle de la grue. Ces moyens de commande sont de préférence au niveau des accoudoirs ou sur un tableau frontal, afin d'être à la portée d'un opérateur installé sur le siège 22.

Pour réaliser les opérations d'arrachage, la grue 20 comporte à son extrémité libre, opposée à son extrémité d'ancrage sur le tracteur 10, un grappin 21 dont chaque crochet se termine par un peigne 211 qui lui est perpendiculaire, en sorte que les deux peignes 211 soient en regard.

Le grappin 21 est fixé à la grue 20 via un rotateur 23 qui constitue une liaison pivot à 360° par rapport à l'axe du dernier tronçon de la grue.

La figure 2 permet de bien visualiser le grappin 21 et la disposition des peignes 211.

La figure 3 comprend une vue de détail autour du grappin 21.

Le grappin 21 peut être commandé entre une position ouverte, dans laquelle les peignes 211 sont écartés l'un de l'autre pour venir attraper une certaine quantité de plantes, et une position fermée, dans laquelle les peignes 211 sont accolés avec leurs dents respectives intercalées et entrecroisées pour bien saisir les tiges des plantes notamment, sans les couper.

En effet, la disposition des peignes 211, dont les dents sont sensiblement parallèles aux tiges, empêche tout cisaillement des tiges et donc limite au maximum le découpage des tiges.

La figure 4 représente le grappin 21 dans une position fermée montrant l'entrecroisement des dents des peignes 211.

Dans cette position fermée, le grappin 21 permet en plus de l'arrachage des plantes une préhension de ces dernières en vue de les charger dans la remorque flottante 30.

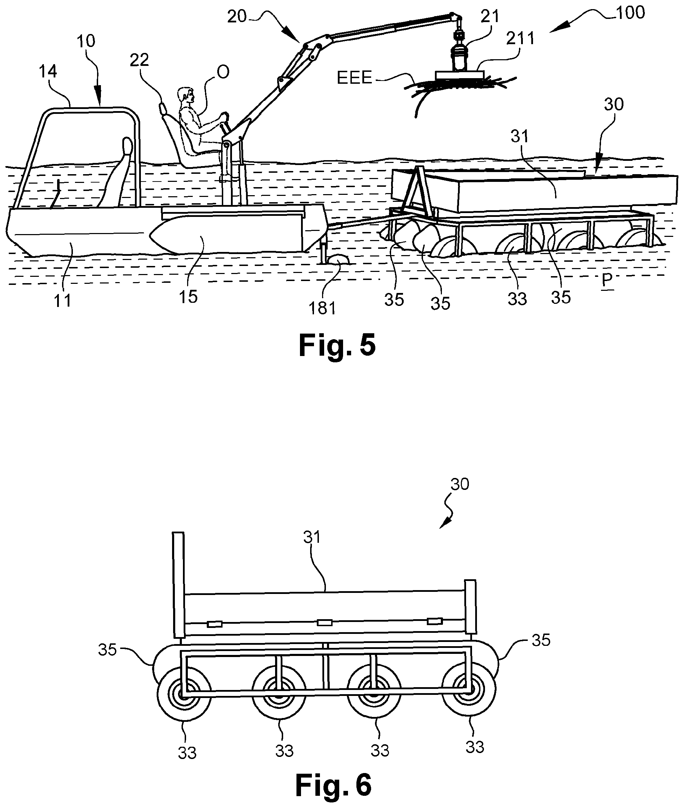

La figure 5 représente en effet le véhicule amphibie 100 lors d'une opération sur un plan d'eau P, au cours de laquelle la grue 20 charge des plantes EEE arrachées dans la remorque flottante 30.

La remorque 30 comporte une benne 31 de collecte des plantes arrachées et autres débris. Cette benne 31 définit un volume de stockage suffisant, équivalent à la taille du tracteur sur l'exemple illustré.

La remorque 30 comporte des roues 33 et des flotteurs 35, sous la benne 31, agencés longitudinalement à sa direction de déplacement.

Selon l'exemple de réalisation illustré, la remorque 30 comporte deux rangées latérales de roues 33 comprenant chacune quatre roues, et quatre flotteurs 35 rangés deux à deux avec leurs quatre têtes coniques pointant vers l'extérieur de la remorque 30.

La figure 6 représente schématiquement la remorque flottante 30 en vue de côté. La remorque 30 est ainsi tractée par le tracteur 10 en étant attelée à ce dernier au moyen d'un relevage arrière 17, visible sur la figure 2.

Le tracteur 10 comporte en outre un relevage avant 16 permettant d'atteler d'autres outils si besoin.

En outre, le tracteur 10 comporte un stabilisateur 18 à roues 181, sous forme de pantographe, comme représenté sur la figure 4.

Le stabilisateur 18 permet d'améliorer la flottaison et la stabilité du tracteur 10. En effet, les roues 181 du stabilisateur 18 sont surélevées par rapport aux flotteurs 15 du tracteur et permettent de relever le tracteur malgré l'évasement, au moins au niveau du stabilisateur.

Le véhicule amphibie 100 ainsi décrit permet de procéder à un arrachage définitif des plantes invasives en toute simplicité et avec une grande efficacité, notamment en centralisant certaines commandes hydrauliques. A cet effet, le véhicule amphibie 100 comporte une centrale hydraulique pour commander, entre autres, la grue 20, les flotteurs articulés 15 et le stabilisateur 18.

Il ressort de la présente description que certains éléments non essentiels du véhicule amphibie peuvent être modifiés, remplacés ou supprimés sans pour autant sortir du cadre de l'invention défini par les revendications ci-après. Par exemple, le nombre de flotteurs et leur disposition peuvent varier selon le besoin de chaque utilisateur.

## Revendications

1. Véhicule amphibie (100), d'entretien d'une zone humide (P) notamment par le retrait d'une espèce exotique envahissante (EEE) de type plantes aquatiques invasives ou similaires, comportant un tracteur amphibie (10) motorisé et un moyen d'arrachage, ledit véhicule étant **caractérisé en ce qu'**il comporte en outre une remorque flottante (30) tractée par le tracteur (10) et comprenant une benne (31) de collecte des plantes arrachées, et **en ce que** le moyen d'arrachage est une grue télescopique (20) équipée d'un grappin (21) à son extrémité libre, ledit grappin étant configuré pour permettre à la fois la préhension et l'arrachage de plantes invasives, en sorte de les déposer dans la benne (31).

2. Véhicule amphibie selon la revendication 1, dans lequel la remorque flottante (30) comporte des roues (33) et des flotteurs (35) placés sous la benne (31) et agencés latéralement et longitudinalement à une direction de déplacement de ladite remorque.

3. Véhicule amphibie selon la revendication 1 ou 2, dans lequel le tracteur amphibie (10) comporte des flotteurs (15) placés latéralement d'un côté et de l'autre d'un châssis (11) du tracteur et longitudinalement par rapport à une direction de déplacement du tracteur.

4. Véhicule amphibie selon la revendication 3, dans lequel les flotteurs (15) du tracteur (10) sont articulés en « papillon » entre une position basse de flottaison et une position haute de rangement réduisant la largeur dudit tracteur.

5. Véhicule amphibie selon l'une quelconque des revendications précédentes, dans lequel la grue (20) est montée rotative sur une surface supérieure (12) du tracteur amphibie (10).

6. Véhicule amphibie selon l'une quelconque des revendications précédentes, dans lequel le tracteur amphibie (10) comporte une cabine de conduite (14), et la grue (20) comporte un siège de commande (22) qui lui est couplé en rotation et qui est indépendant de ladite cabine de conduite.

7. Véhicule amphibie selon l'une quelconque des revendications précédentes, dans lequel le tracteur amphibie (10) comporte en outre un stabilisateur (18), sous forme de pantographe pourvu de deux roues (181) à ses extrémités, pour améliorer la flottaison et la stabilité dudit tracteur.

8. Véhicule amphibie selon l'une quelconque des revendications précédentes, dans lequel le grappin (21) comporte deux peignes (211) en regard, dont les dents s'intercalent lorsque ledit grappin est fermé en sorte d'arracher des plantes invasives à la racine sans les couper.

9. Véhicule amphibie selon l'une quelconque des revendications précédentes, dans lequel le tracteur (10) comporte au moins un relevage (16, 17) permettant d'atteler la remorque flottante (30).

10. Véhicule amphibie selon l'une quelconque des revendications précédentes en combinaison avec les revendications 4 et 7, comportant une centrale hydraulique commandant la grue (20) ainsi que les flotteurs (15) et le stabilisateur (18) du tracteur (10).
